## Europäisches Patentamt
## European Patent Office
## Office européen des brevets

(11) Veröffentlichungsnummer: **0 155 458**
**B1**

(12) **EUROPÄISCHE PATENTSCHRIFT**

(45) Veröffentlichungstag der Patentschrift: **11.04.90**

(21) Anmeldenummer: **85100665.0**

(22) Anmeldetag: **23.01.85**

(51) Int. Cl.⁵: **B 01 D 25/12**

(30) Priorität: **31.01.84 DE 3403163**
**18.06.84 DE 3422574**
**02.07.84 DE 3424325**
**27.08.84 DE 3431401**

(43) Veröffentlichungstag der Anmeldung:
**25.09.85 Patentblatt 85/39**

(45) Bekanntmachung des Hinweises auf die
Patenterteilung:
**11.04.90 Patentblatt 90/15**

(84) Benannte Vertragsstaaten:
**AT BE CH DE FR GB IT LI LU NL SE**

(73) Patentinhaber: **JV KUNSTSTOFFWERK GMBH**
**Obere Lerch 2**
**D-8544 Georgensgmünd (DE)**

(72) Erfinder: **Neu, Werner, Dr. Dipl.-Ing.**
**Gieseckenkamp 24**
**D-3012 Langenhagen (DE)**

(74) Vertreter: **Keil, Rainer A., Dipl.-Phys. Dr.**
**KEIL & SCHAAFHAUSEN Patentanwälte**
**Eysseneckstrasse 31**
**D-6000 Frankfurt am Main 1 (DE)**

(54) **Membranfilterplatte.**

(56) Entgegenhaltungen:
EP-A-0 070 473      GB-A-1 134 025
DE-A-1 536 870      GB-A-1 450 422
DE-A-2 238 323      GB-A-2 069 360
DE-A-3 216 957      GB-A-2 110 104
GB-A- 878 991       US-A-3 931 014
GB-A-1 118 383

Courier Press, Leamington Spa, England.

## Beschreibung

Die Erfindung betrifft eine Membranfilterplatte, bestehend aus einem plattenförmigen Grundkörper mit mindestens einem Rezeß, der an seinem Rand durch ansteigende Flächen und eine Stufe in die den rahmenförmigen Rand des Grundkörpers bildende Ebene übergeht, und aus mindestens einer in ihren Flächendimensionen kleineren, aus einem gummielastischen Werkstoff bestehenden, im nicht durch Druck beaufschlagten Zustand ebenen Membran mit verdicktem Rand mit einer umlaufenden Rippe, die in eine umlaufende Nut im Grundkörper eingreift, wobei der Membranrand mit der Rippe ein Winkelprofil bildet und wobei der nicht vom Membranrand bedeckte Teil des rahmenförmigen Randes des Grundkörpers die Dichtfläche bildet und die Schließkraft überträgt.

Eine derartige Membranfilterplatte ist aus der GB—A—21 10 104 bekannt. Die Membranoberfläche liegt hierbei in der Ebene, die durch die Oberflächen des Randes des Grundkörpers gebildet wird. Am Rand weist die Membran eine umlaufende Rippe auf. Diese umlaufende Rippe wird in dichtendem Eingriff mit dem Grundkörper allein durch den Druck der Nachbarmembranfilterplatte gepreßt. Diese Rippe weist keinerlei Mittel auf, um am Grundkörper gehalten zu werden. Das hat den Nachteil, daß beim Öffnen der Filterpresse nach einem Filtervorgang die Membran von dem im allgemein vertikal stehenden Grundkörper abfällt und am Filterkuchen haftet, von dem sie dann erst abgezogen und für den nächsten Filtervorgang wieder am Grundkörper montiert werden muß.

Weiterhin sind Membranfilterplatten aus der US—A—39 31 014 und der DE—A—19 60 821 bekannt. Der Grundkörper ist hier aus einem Rahmen gefertigt, in den eine topfförmige Platte eingeschweißt ist. Deren Rand bildet mit einer stufenförmigen Ausnehmung im Rand des Grundkörpers eine Schwalbenschwanznut, die zur Befestigung der Membran dient. Die Membran ist topfförmig hergestellt und weist einen einzuklemmenden Rand auf, der an seinem Außenrand eine auf den Grundkörper zu gerichtete Rippe von Schwalbenschwanzform trägt, die in die Schwalbenschwanznut eingepreßt wird. Dadurch erhält die Membran einen sicheren Sitz, den sie auch dann behält, wenn die Plattenfilterpresse geöffnet wird und das gepreßte Filtergut entnommen wird. Jedoch hat bei dieser Membranfilterplatte die Membran nicht eine so lange Lebensdauer, wie sie von anderen Membranen aus dem gleichen gummielastischen Material bekannt ist. Diese Verkürzung der Lebensdauer ist auf die Beanspruchung des Materials durch die erheblichen Preßdrücke der Plattenfilterpressen zurückzuführen. Die Druckübertragung auf den Membranrand führt dazu, daß das gummielastische Material der Membran anfängt zu fließen, wodurch die Lebensdauer der Membran verkürzt wird.

Bei Membranfilterplatten gemäß der GB—A— 11 18 383 ist bekannt, die Membran mitsamt dem Filtertuch im Bereich der Zuflußöffnung durch mit einem Flansch versehene, in den Grundkörper einschraubbare Nippel zu befestigen und an dieser Stelle auch eine Abdichtung durch das Anpressen der Membran an den Grundkörper durch den Flansch zu erreichen.

Bei der GB—A—14 50 442 wird die Abdichtung im Bereich des Trübezuflusses durch andere Mittel bewirkt. Die beiden, zu den beiden Seiten eines Grundkörpers angeordneten Membranen weisen hier eine Randkonstruktion auf, die ineinandersteckbare Teile aufweist. Diese ineinandersteckbaren Teile werden von innen her durch geschlitzte, im Querschnitt keilförmige Klemmringe, die durch eine dreiteilige Verschraubung nach außen gegen die Verbindungsstelle der beidem Membranen gedrückt werden, geklemmt.

Die Erfindung vermeidet die Nachteile des Standes der Technik. Es ist die Aufgabe der Erfindung, eine Membran einfacher Formgestaltung und langer Lebensdauer zu schaffen, die einfach in der Herstellung sowie einfach und sicher im Grundkörper einzuspannen ist und mit der auch aggressive Filtergüter einwandfrei filtrierbar sind.

Diese Aufgabe wird im wesentlichen dadurch gelöst, daß die Nut im Grundkörper im oder unmittelbar neben dem Bereich der den Rezeß begrenzenden Schrägfläche angeordnet ist, daß die Randfläche des Rezesses außerhalb der umlaufenden Nut eine Tiefe aufweist, die der Dicke des Membranrandes abzüglich einer Einfederungshöhe entspricht und daß der Membranrand sowie der komplementäre Außenrand der Stufe im Querschnitt keilförmig gestaltet sind, so daß die Randfläche der Stufe den Rand des Grundkörpers hinterschneidet.

Hierbei ist es zweckmäßig, wenn der Grundkörper einstückig auf Kunststoff, insbesondere Polypropylen, hergestellt ist.

Der Membranrand ist hier nach Art eines Winkels gestaltet, dessen einer Schenkel nach außen und dessen anderer Schenkel auf den Grundkörper zu gerichtet ist. Dabei ist das Ende des nach außen gerichteten Schenkels so gestaltet, daß eine Klemmwirkung der eingesetzten Membran an dem Grundkörper erzielt wird. Die Herstellungsformen für den Grundkörper und für die Membran werden dadurch einfach, die Einspannung ist leicht vorzunehmen und sicher. Die Membran zeichnet sich durch eine lange Lebensdauer aus. Denn is nicht durch Druck beaufschlagten Zustand ist die Membran eben, sie dehnt sich bei Druckbeaufschlagung im Filterbetrieb. Derartige Dehnungsvorgänge können gummielastische Werkstoffe ohne einbuße an Lebensdauer vertragen. Eine Faltung dieser Membran kommt in keinem Betriebszustand vor. Da der Rand des Rezesses außerhalb der umlaufenden Nut die Stufe aufweist, die der Dicke der Membran abzüglich einer Einfederungshöhe entspricht, ist die Pressung des Membranrandes selbst bei hohen Preßdrucken gering, wenn überhaupt vorhanden. Denn die Preßdrucke werden von dem nicht von der Membran bedeckten Teil des rahmenförmigen Randes des Grundkorpers übertragen, der gleichzeitig die Dichtflache bildet.

Vorteilhaft ist es, wenn die Wandungen der Rippe, ebenso wie die Wandunger, der Nut, parallel zueinander verlaufen. Dadurch wird eine einfache Geometrie erzielt. Diese einfache Geometrie bedeutet ein Ersparnis an Herstellungskosten sowohl der Form für den Grundkörper als auch der Form für die Membran.

Weiter wird die Herstellung dadurch vereinfacht, daß die Nutwandungen ebenso wie die Wandungen der Rippe rechtwinkling zur Randebene des Grundkörpers bzw. der Membranebene verlaufen.

Ähnlich einfach wie die Randeinspannung der Membran läßt sich auch der Rand der als Trübeeinlauf dienenden Öffnung einspannen, wenn mit Abstand von Rand der Öffnung an der Membran eine Rippe und in dem Grundkörper eine Nut angeordnet ist, wobei die Membran durch eine Verschraubung an die Grundplatte angeklemmt ist.

Die hierzu dienende Verschraubung wird zweckmäßigerweise so gestaltet, daß die Verschraubung dreiteilig ist und aus zwei mit Flansch versehenen Rohrstücken besteht, daß das eine Rohrstück des Verschraubungsteiles ein Innengewinde aufweist, in das das Außengewinde des Rohrstückes eines mittleren Verschraubungsteiles mit dem Flansch eingeschraubt ist, auf dem das zweite Verschraubungsteil mit dem Rohrstück und dem Flansch frei verdrehbar und axial zwischen dessen Flansch und dem ersten Verschraubungsteil verschiebbar sitzt, daß die an den Filtertüchern und Membranen anliegenden Flansche der Verschraubungsteile so dick sind, daß sie bis zu der Ebene der Randabdichtung reichen oder geringfügig über diese im nicht zusammengepreßten Zustand der Filteranlage hinausstehen, und daß die an den Filtertüchern und Membranen anliegenden Flansche der Verschraubungsteile mindestens einer radiale Ausnehmung aufweisen.

Der Vorteil dieser Verschraubung besteht darin, daß ihre Teile völlig aus Kunststoff hergestellt werden können. Denn beim Einschrauben der Verschraubung wird diese nur so eingeschraubt, daß ihre Teile relative locker in der Öffnung in dem Grundkörper sitzen. Da die Stirnseiten der Flansche benachbarter Membranfilterplatten aneinander anliegen, wird die Membran durch den Flansch erste dann unter vollem Druck an den Grundkörper angepreßt, wenn die Plattenfilterpresse unter Druck gesetzt wird. Da die beiden äußeren Flanschteile bei dieser Konstruktion relativ zueinander beweglich sind, wenn sie aufeinander zu bewegt werden, treten in den Kunststoffteilen nur geringe Zugkräfte auf, während hohe Druckkräfte auftreten können, die aber den Kunststoffteilen nicht schädlich sind.

Vorteilhaft ist es, wenn auf dem Boden der Nut eine Erhebung oder ein Vorsprung vorgesehen sind. Hierdurch wird eine verbesserte Abdichtung erreicht.

Um den Filtratauslauf im Bereich der Membran so zu gestalten, daß keine Undichtigkeiten zwischen Membran und Grundkörper auftreten und ständig ein einwandfreier Ablauf des Filtrats gewährleistet ist, auch dann, wenn das Filtergut durch Druckluft in den Räumen zwischen Membran und der Oberfläche des Rezesses im Grundkörper beaufschlagt ist, ist es zweckmäßig, daß die rahmenartige Verstärkung im Bereich des Filtratablaufes in zwei Stege geteilt ist, daß sich zwischen den beiden Stegen die Durchbrechung für den Filtratablauf befindet und daß der innere Steg mehrere ihm querende kanalartige Ausnehmungen aufweist.

Hierdurch ist erreicht, daß die rahmenartige Verstärkung ihre Dichtungsfunktion beibehält und das sich zwischen dem Filtertuch und der Membran sammelnde Filtrat einwandfrei durch die kanalartigen Ausnehmungen in die Durchbrechung der Membranfilterplatte gelangen kann. Diese kanalartige Ausnehmungen können weder unter dem Druck der Filterpresse noch unter dem Druck der Druckluft zwischen Membran und Grundkörper verschlossen werden und gewährleisten damit in allen Betriebszuständen eine einwandfreie Abführung des Filtrats.

Vorteilhaft ist es, wenn von den Teilen des inneren Steges zwischen den kanalartigen Ausnehmungen Zungen sich in Richtung auf mittlere Bereich der Membran erstrecken. Diese Zungen dienen dazu, die Abstützungsfunktion der Bereiche zwischen den kanalartigen Ausnehmungen weiter in Richtung auf mittlere Bereiche der Membrane zu verlängern.

Dabei ist es zweckmäßig, wenn die Zungen die gleiche Höhe wie der innere Steg aufweisen. Dann können sie ihre Abstützungsfunktion besonders gut ausüben.

Vorteilhaft ist es, wenn rings um die Ausnehmung bzw. Ausnehmungen auf der dem Grundkörper zugewandten Seite der Membran ein ringförmiger Vorsprung angeordnet ist, der zweckmäßigerweise an seinen Seiten mit Dichtungslippen versehen ist. Hierdurch wird die Abdichtung zwischen Grundkörper und Membran erheblich verbessert.

Das Wesen der Erfindung ist nachstehend anhand eines in der Zeichnung schematisch dargestellten Ausführungsbeispieles näher erläutert. Es zeigen:

Fig. 1 eine Ansicht der Grundplatte,

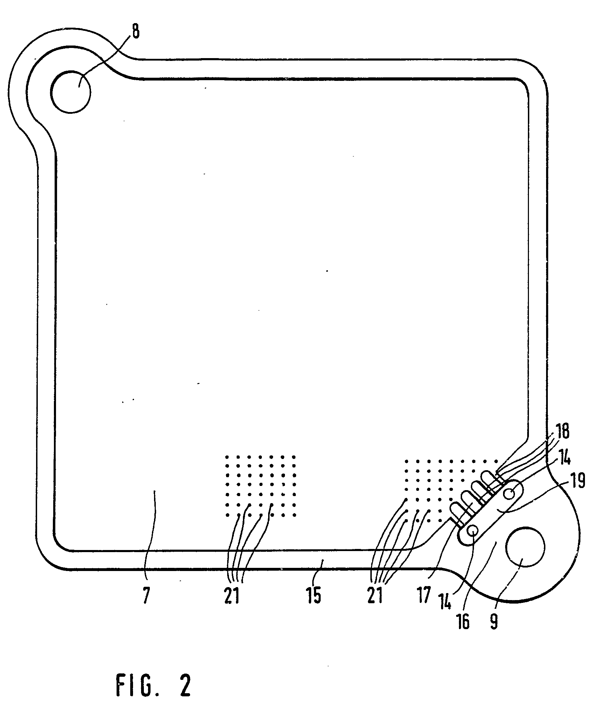

Fig. 2 eine Ansicht der Seite der Membran, die dem Grundkörper angewandt ist.

Fig. 3 eine Ansicht der Seite der Membran, die dem Grundkörper zugewandt ist,

Fig. 4 einen Querschnitt durch einen Teil von zwei Grundkörpern mit je zwei Membranen,

Fig. 5 einen Querschnitt durch einen Teil von in der Filterpresse zusammengepreßten Grundkörpern mit je zwei Membranen am Ort des Trübeeinlaufes,

Fig. 6 einen Schnitt durch einen Teil einer Membranfilterplatte mit eingebauter Verschraubung,

Fig. 7 zwei benachbarte Teile von Membranfilterplatten mit eingebauten Verschraubungen vor der Anwendung des Preßdruckes in der Filterpresse,

Fig. 8 ein Verschraubungsteil, nämlich das mit Flansch versehene axial verschiebbare Rohrstück,

Fig. 9 ein Verschraubungsteil, nämlich das mit Flansch versehene Rohrstück, das an dem dem Flansch abgewandten Ende ein Innengewinde trägt,

Fig. 10 ein Verschraubungsteil, nämlich das mit Flansch versehene Rohrstück mit Innengewinde,

Fig. 11 die zusammengebaute Verschraubung, ebenfalls im Schnitt,

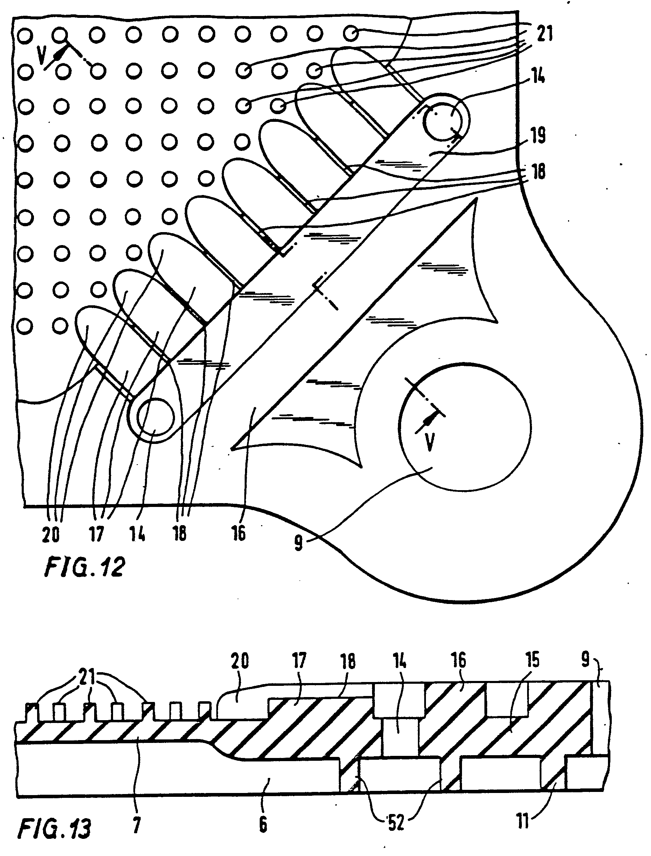

Fig. 12 in Vergrößerung eine Ansicht der Ecke der Membran mit dem Filtratablauf,

Fig. 13 einen Querschnitt durch diese Ecke,

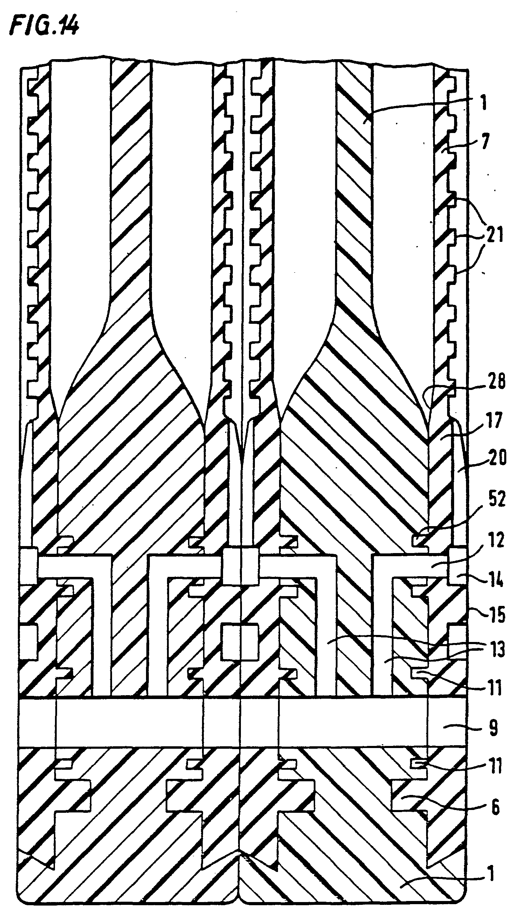

Fig. 14 einen Querschnitt durch eine Teil von zwei Grundkörpern mit Membranen im Bereich des Filtratauslaufes im Betriebszustand,

Fig. 15 eine andere Ausführungsform der Membran,

Fig. 16 einen vergrößerten Abschnitt aus der Membran der Fig. 15.

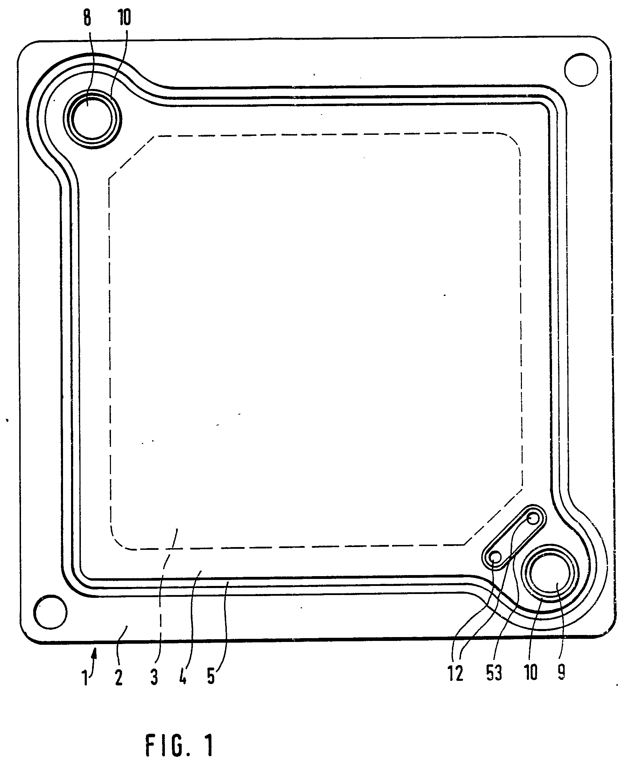

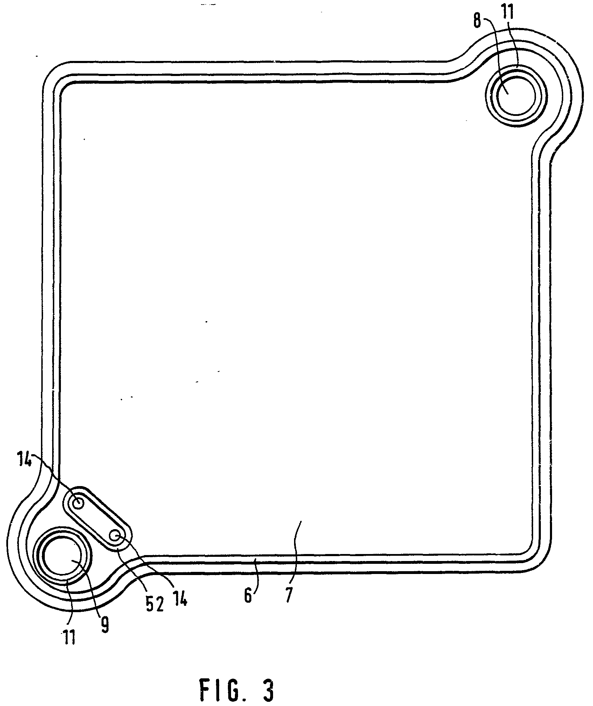

Die Membranfilterplatte weist einen Grundkörper 1 mit einem umlaufenden ebenen Rand 2 auf, der den mittig angeordneten Rezeß 3 umgibt, wie dies aus Fig. 1 ersichtlich ist. Am Rand 4 des Rezesses 3 befindet sich eine Nut 5, die dem Eingreifen einer in Fig. 3 dargestellten Rippe der Membran 7 dient.

Der Grundkörper 1 ist mit einem als Durchbrechung ausgebildeten Trübeeinlauf 8 und einem ebenfalls als Durchbrechung ausgebildeten Filtratablauf 9 versehen. Um den Trübeeinlauf 8 verläuft eine Nut 10, die zur Aufnahme einer Rippe 11 der Membran 7 dient. Um den Filtratablauf 9 ist ebenfalls eine Nut 10 sowie an der Membran 7 eine Rippe 11 angeordnet. Das Filtrat fließt aus dem Bereich zwischen der Membran 7 und einem nicht dargestellten Filtertuch durch Löcher 14 in der Membran 7 in Öffnungen 12, die über Ablaufkanäle 13 mit dem Filtratablauf 9 verbunden sind.

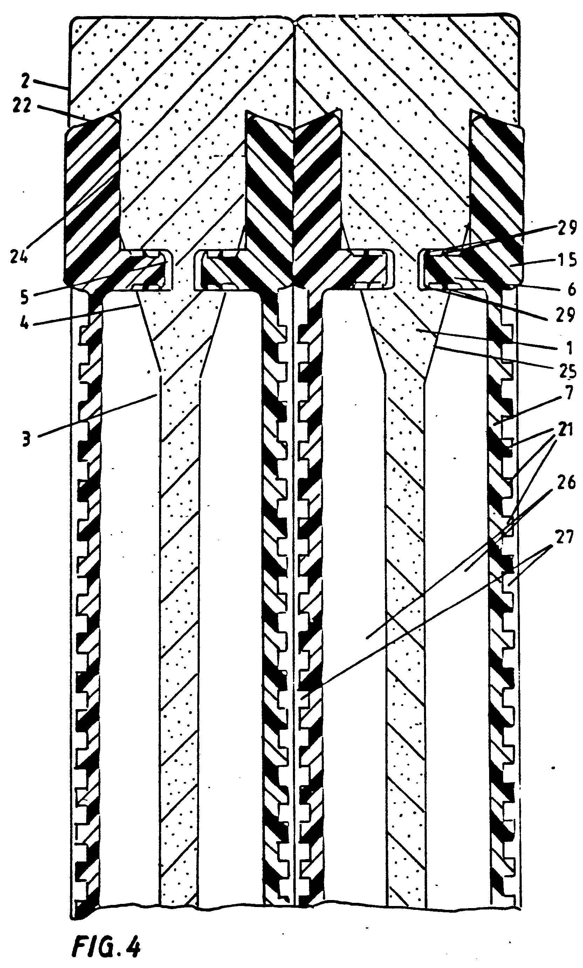

Der ebene Rand 2 des Grundkörpers 1 dient als Dichtrand, wobei neben dem ebenen Rand 2 eine Stufe 22 ausgebildet ist (Fig. 4). Um die Höhe der Stufe 22 versetzt verläuft die Randfläche 24 für den Membranrand 15. Diese Randfläche 24 geht in die Schrägfläche 25 über, die den Rand 4 des Rezesses 3 bildet. In diese Schrägfläche 25 ist eine Nut 5 eingearbeitet, in die eine Rippe 6 aufnehmbar ist, die am Membranrand 15 angeordnet ist. Die Rippe 6 und der Membranrand 15 bilden ein winkelförmiges Bauteil, wodurch der Membranrand 15 eine hohe Steifigkeit erreicht.

Der Membranrand 15 sowie der komplementäre Außenrand der Stufe 22 sind im Querschnitt keilförmig derart ausgebildet, daß die Randfläche 24 der Stufe 22 den Rand 2 des Grundkörpers 1 hinterschneidet. Durch diese Ausgestaltung erreicht der Membranrand 15 einen festen Sitz in dem Grundkörper 1.

Die Membran 7 ist im nicht mit Druck beaufschlagten Zustand eben. Sie ist mit einer Vielzahl von Noppen 21 auf der dem Grundkörper 1 abgekehrten Seite versehen, um das nicht dargestellte Filtertuch unter Bildung von Fließwegen für das Filtrat abstützen zu können. Zwischen dem Grundkörper 1 und der Membran 7 befindet sich ein Hohlraum 26, der im Laufe des Filtrier vorgangs immer kleiner wird. Zwischen den Membranen 7 zweier benachbarter Grundkörper 1 befindet sich der Raum 27, in den die Trübe eingelassen wird und in dem sich der Feststoff (Filterkuchen) sammelt. Im Laufe des Filtriervorganges wird in die Hohlräume 26 Druckluft eingelassen, die den Filterkuchen im Raum 27 unter Druck setzt und dadurch restliches Filtrat aus dem Raum 27 ausdrückt.

Die äußeren Oberflächen 23 des Membranrandes 15 stehen im ungepreßten Zustand ein wenig über die Ebene, die durch den Rand 2 des Grundkörpers 1 gebildet wird, hinaus. Wenn die beiden Grundplatten 1 in der Plattenfilterpresse zusammengepreßt sind, liegen in diesem Falle die Ränder 2 der Grundkörper 1 fest aneinander an.

Um zu starke Biegebeanspruchungen beim Übergang der Membran 7 in den Membranrand 15 zu vermeiden, kann es zweichmäßig sein, vor dem Übergangsbereich einen im Querschitt keilförmigen Ansatz 28 an der Membran 7 anzuformen.

Zweckmäßigerweise ist die Nut 5 so tief ausgebildet, daß die eingepaßte Rippe 6 nicht an der Stirnseite der Nut 5 anliegt. Die Rippe 6 weist an ihren Seitenwandungen Dichtlippen 29 auf.

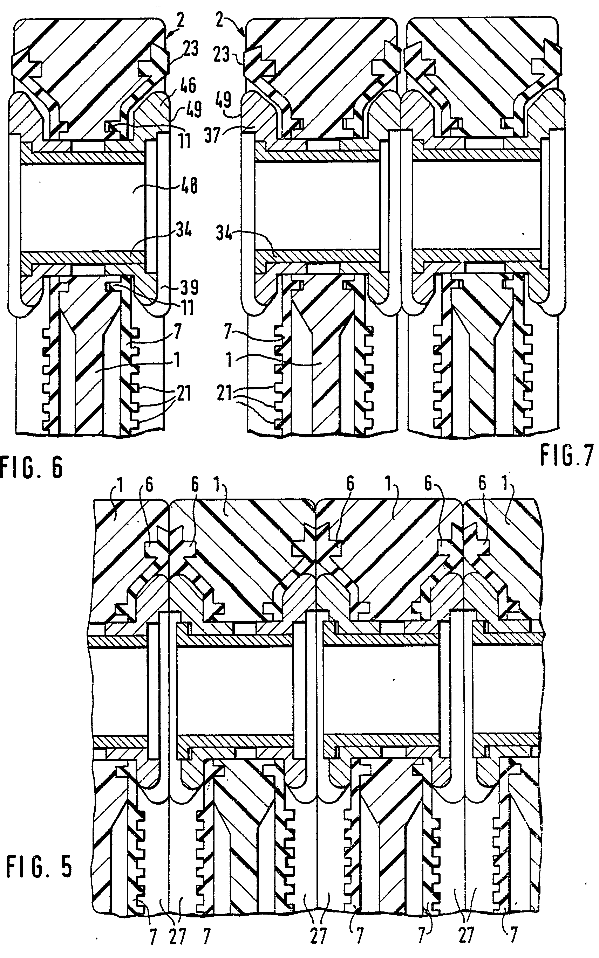

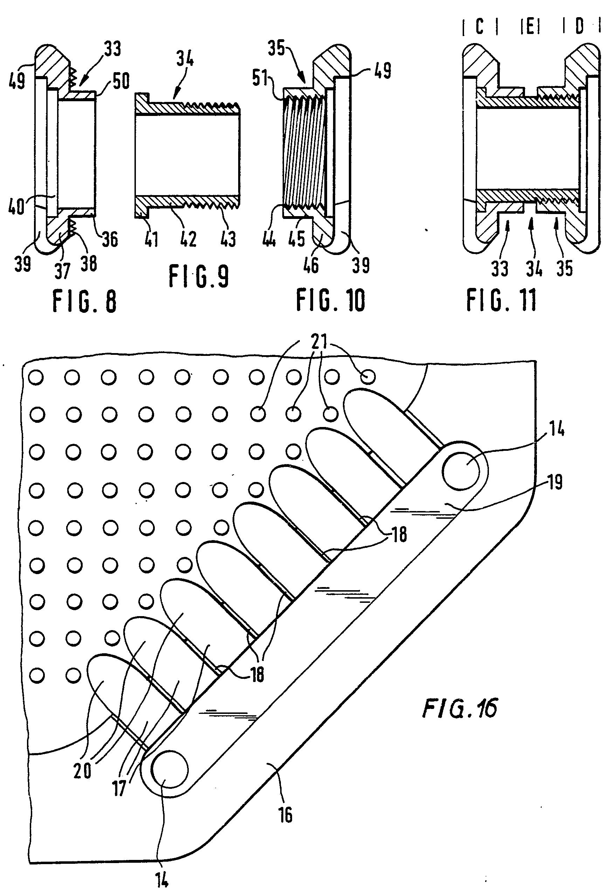

Der Trübeeinlauf 8, der in den Fig. 5 bis 11 näher dargestellt ist, ist als Durchbrechung ausgebildet, welche von einer Nut 10 umgeben ist. Auch die Membran 7 und das nicht dargestellte Filtertuch weisen eine derartige Durchbrechung an der entsprechenden Stelle auf. Membran 7 und Filtertuch werden an dieser Stelle mit Hilfe einer dreiteiligen Verschraubung 33, 34, 35 am Grundkörper 1 befestigt. Die drei einzelnen Teile der Verschraubung 33, 34, 35 sind in den Fig. 8, 9 und 10 näher dargestellt. Zusammengebaut ist die Verschraubung in Fig. 11 veranschaulicht.

Die Verschraubung 33, 34, 35 weist ein Verschraubungsteil 33 auf, welches aus einem Rohrstück 36 und einem daran befestigten Flansch 37 besteht. Der Flansch 37 weist auf seiner dem Filtertuch und Membran 7 zugekehrten Rückseite ringförmige Vorsprünge 38 auf. Die Vorderseite des Flansches 37 ist eine glatte ringförmige Fläche, die lediglich durch eine oder mehrere radiale Ausnehmungen 39 unterbrochen ist. Diese radiale Ausnehmung 39 bildet im zusammengebauten Zustand, wie dies in Fig. 11 dargestellt ist, einen Kanal für den Einlauf der Trübe aus dem Trübeeinlauf 8 in den Raum 27 für Trübe und Filterkuchen zwischen zwei Membranen 7, die auf benachbarte Grundkörper 1 gespannt sind. Der Flansch 37 weist dicht neben der Übergangsstelle in das Rohrstück 42 eine ringförmige Ausnehmung 40 auf. In diese Ausnehmung 40 greift der Flansch 41 des Verschraubungsteiles 34 ein. Der Flansch 41 ist an dem einen Ende des Rohrstückes 42 angebracht, welches auf dem anderen Ende ein Außengewinde 43 trägt. Das Außengewinde 43 ist in das Innengewinde 44 des in Fig. 10 dargestellten Verschraubungsteiles 35 einschraubbar. Das Verschraubungsteil 35 weist ein Rohrstück 45 und einen daran angebrachten Flansch 46 auf, dessen Stirnseite 49 eine radiale Ausnehmung 39 aufweisen kann, die ebenfalls als Kanal für den Zufluß der Trübe aus dem Trübeeinlauf 8 in den Raum 27 für Trübe und Filterkuchen dienen kann.

Im zusammengebauten Zustand ist die Verschraubung 33, 34, 35 in Fig. 5 dargestellt. Wesentlich an dieser Verschraubung ist, daß das mittlere Verschraubungteil 34 mit seinem Außengewinde 43 in das Innengewinde 44 des Verschraubungsteiles 35 eingeschraubt ist, während sich das Verschraubungsteil 33 zwischen dem Flansch 41 und der Stirnseite 51 des anderen mit Flansch 46 versehenen Verschraubungsteiles 35 axial frei verschieben kann, wobei die Verschraubungsteile 33 und 34 sich auch zueinander drehen können. Wie insbesondere aus Fig. 11 ersichtlich ist, hat das Verschraubungsbauteil 33 die Möglichkeit, sich axial um die Strecke E zu verschieben.

In Fig. 6 der Zeichnung ist dargestellt, wie die Verschraubung 33, 34, 35 die Membran 7 an den Grundkörper 1 andrückt. Im Bereich des Trübeeinlaufes 8 weist der Membranrand 15 eine Rippe 11 auf, die in die Nut 10 in den Grundkörper 1 eingelegt ist. Am Membranrand 15 liegt der Flansch 37 an und drückt die Rippe 11 in die Nut 10. Aus der Nut 10 kann die Rippe 11 nicht austreten, so lange die Verschraubung 33, 34, 35 eingesetzt ist, auch wenn sie sich in einem lockeren Zustand befindet. Die Dicke des Flansches 37 ist derart dimensioniert, daß bei eingesetzter Verschraubung 33, 34, 35, wenn also die Rippe 11 in die Nut 10 eingepaßt ist und die Rückseite des Flansches 37 an der Membran 7 anliegt, so daß die Rippe 11 aus der Nut 10 nicht austreten kann, die Stirnseite 49 über den Rand 2 etwas hinaussteht.

Werden nun die Membranfilterplatten in eine Filterpresse eingehängt, wie dies in Fig. 7 dargestellt ist, berühren sich die Stirnseiten 49 benachbarten Flansche 37, 46 bereits dann, wenn sich die Ränder 2 noch nicht berühren. Zwischen den Oberflächen der Membranränder 15 benachbarter Membranen 7 befindet sich dann zweckmäßigerweise noch etwas Luft. Die Dimensionierung kann aber auch derart vorgenommen werden, daß die Oberflächen benachbarter Membranränder 15 sich gerade berühren. Zwischen den Rändern 2 benachbarter Grundkörper 1 soll dann im ungepreßten Zustand aber Luft sein. Werden nun in der Filterpresse die eingesetzten Membranfilterplatten mit Druck beaufschlagt, wie das in Fig. 5 dargestellt ist, pressen sich die Membranfilterplatten so zusammen, daß die Ränder 2 benachbarter Grundkörper 1 aneinander liegen, wodurch die Stirnseiten 49 der Flansche 37, 46 dicht aufeinandergepreßt und gegen die Membranen 7 am Ort ihrer Rippen 11 gepreßt werden. Dadurch entsteht eine sehr dichte Verbindung zwischen der Membran 7, so daß aus den Räumen 27 fließende Trübe nicht durch die Grenzfläche Membran 7—Grundkörper 1 hindurchtreten kann. Während dieses Aufeinanderpressens der Membranfilterplatten verschiebt sich jeweils der Flansch 37 auf dem Rohrstück 42 des Verschraubungsteiles 34. Wie aus Fig. 5 ersichtlich, stehen jetzt die Stirnseiten 50, 51 der Rohrstücke 36, 45 der Verschraubungsteile 33, 35 dichter aneinader als im ungepreßten Zustand in Fig. 7.

Da der eigentliche Preßdruck für das Andrücken der Membranen 7 an die Grundkörper 1 erste durch den Druck der Filterpresse erzeugt wird, der über die Flansche 37, 46 übertragen wird, können die Verschraubungsteile 33, 34, 35 aus Kunststoff hergestellt werden. Denn bei dieser Konstruktion wird der Anpreßdruck für die Membranen 7 an die Grundkörper 1 nicht durch die Verschraubung 33, 34, 35 und das Außengewinde 43 sowie das Innengewinde 44 erzeugt, sondern allein durch die Kraft der Filterpresse. Aus diesem Grunde können keine Teile, wie z. B. des Gewindes 43, 44 oder der Rohrstücke 36, 42, 45 ausreißen. Die Flansche 37, 46 hingegen sind derart ausgebildet, daß sie den auf ihre Außenseiten wirkenden Preßdrücken standhalten, ohne dabei in ein Fließen zu kommen.

Der Filtratablauf ist folgendermaßen ausgebildet:

Der im wesentlichen Winkelförmig ausgebildete verstärkte und die gesamte Membran 7 umgebende Membranrand 15 ist im Bereich der Löcher 14 in zwei Stege 16, 17 geteilt, von denen der äußere Steg 16 eine Abdichtung nach außen hin übernimmt, während im inneren Steg 17 kanalartige Ausnehmungen 18 angeordnet sind, durch die das Filtrat aus dem Bereich zwischen Filtertuch und Membran 7 in die kanalartige Ausnehmung 19 und aus dieser durch die Löcher 14 und Ablaufkanäle 13 in den Filtratablauf 9 fließen kann. Die Zwischenräume zwischen den Ausnehmungen 18 im Steg 17 sind durch in Richtung der Mitte der Membran 7 weisende Zungen 20 verlängert, die Abstützfunktionen übernehmen. Diese Zungen 20 verjüngen sich in ihrer Fläche in Richtung auf die Mitte der Membran 7, so daß die Stütznoppen 21, die über die gesamte Fläche der Membran 7 verteilt sind, sich teilweise auch zwischen Zungen 20 befinden können.

Zur Verbesserung der Abdichtung kann es zweckmäßig sein, wenn auf der dem Grundkörper 1 zugewandten Seite der Membran 7 eine Rippe 52 vorgesehen ist, die in eine Nut 53 im Grundkörper 1 eingreift und die zweckmäßigerweise an ihren Seiten mit Dichtlippen 29 versehen ist.

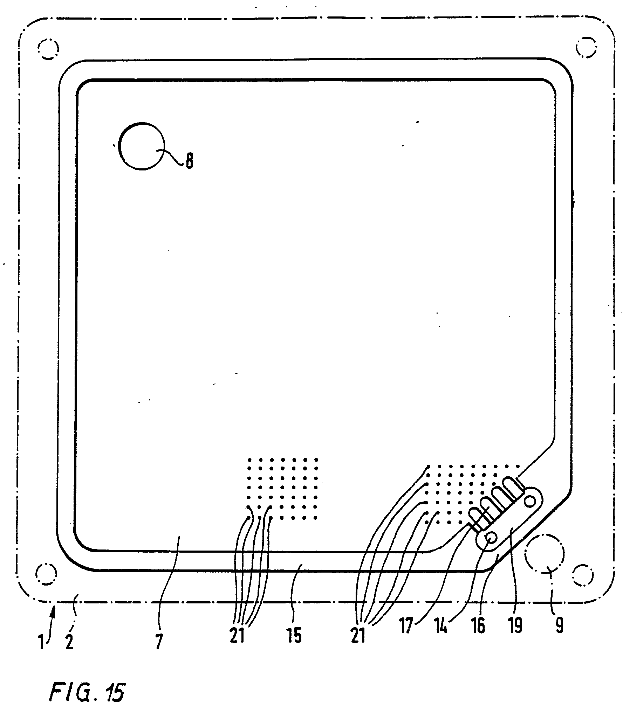

In der in Fig. 15 dargestellten Ausführungsform fehlt der Membran 7 die Rippe 52, die sich um den Filtratablauf 9 herum erstreckt. Die Löcher 14 sind hier durch die Ablaufkanäle 13 mit dem nur im Grundkörper 1, der in der Zeichnung Fig. 15 getrichelt angedeutet ist, angeordneten Filtratablauf 9 verbunden. Der Trübeeinlauf 8 ist hier weiter zur Membranmitte verlegt. Die Membranfläche wird hierdurch kleiner, die Flächenausnutzung besser.

In Fig. 16 ist der Bereich des Filtratsablaufes 9 in Vergrößerung dargestellt.

## Patentansprüche

1. Membranfilterplatte, bestehend aus einem plattenförmigen Grundkörper (1) mit mindestens einem Rezeß (3), der an seinem Rand durch ansteigende Flächen und eine Stufe in die den rahmenförmigen Rand (2) des Grundkörpers (1) bildende Ebene übergeht, und aus mindestens einer in ihren Flächendimensionen kleineren, aus einem gummielastischen Werkstoff bestehenden, im nicht durch Druck beaufschlagten Zustand ebenen Membran (7) mit verdicktem Rand mit einer umlaufenden Rippe (6), die in eine umlaufende Nut (5) im Grundkörper (1) eingreift, wobei der Membranrand (15) mit der Rippe (6) ein Winkelprofil bildet und wobei der nicht von dem Membranrand (15) bedeckte Teil des rahmenförmigen Randes (2) des Grundkörpers (1) die Dichtfläche bildet und die Schließkraft überträgt, dadurch gekennzeichnet, daß die Nut (5) im Grundkörper (1) im oder unmittelbar neben dem Bereich der den Rezeß (3) begrenzenden Schrägfläche (4) angeordnet ist, daß die Randfläche (24) des Rezesses (3) außerhalb der umlaufenden Nut (5) eine Tiefe aufweist, die der Dicke des Membranrandes (15) abzüglich einer Einfederungshöhe entspricht, und daß der Membranrand (15) sowie der komplementäre Außenrand der Stufe (22) im Querschnitt keilförmig gestaltet sind, so daß die Randfläche (24) der Stufe (22) der Rand (2) des Grundkörpers (1) hinterschneidet.

2. Membranfilterplatte nach Anspruch 1, dadurch gekennzeichnet, daß der Grundkörper (1) einstückig aus Kunststoff, insbesondere Polypropylen, hergestellt ist.

3. Membranfilterplatte nach Anspruch 1, dadurch gekennzeichnet, daß die Wandungen der Rippen (6, 11, 52) ebenso wie die Wandungen der Nuten (5, 10, 53) parallel zueinander verlaufen und daß vorzugsweise die Rippen (6, 11, 51) mit Dichtlippen (29) versehen sind.

4. Membranfilterplatte nach Anspruch 1, dadurch gekennzeichnet, daß die Wandungen der Nuten (5, 10, 53) ebenso wie die Wandungen der Rippen (6, 11, 52) rechtwinklig zur Ebene des Randes (2) des Grundkörpers (1) bzw. der Ebene der Membran (7) verlaufen, wobei vorzugsweise auf dem Boden der Nut (5) eine Erhebung oder ein Vorsprung vorgesehen sind, und wobei vorzugsweise zwischen dem Grund der Nut (5, 10) und der Oberfläche der Rippe (6, 11) ein Hohlraum befindlich ist.

5. Membranfilterplatte nach Anspruch 1, mit einer durchgehenden, als Trübeeinlauf (8) dienenden Öffnung, dadurch gekennzeichnet, daß mit Abstand vom Rand des Trübeeinlaufs (8) an der Membran (7) eine Rippe (11) und in dem Grundkörper (1) eine Nut (10) angeordnet ist, wobei die Membran (7) durch eine Verschraubung (33, 34, 35) an die Grundplatte (1) angeklemmt ist.

6. Membranfilterplatte nach Anspruch 5, dadurch gekennzeichnet, daß die Verschraubung (33, 34, 35) dreiteilig ist, vorzugsweise aus Kunststoff hergestellt ist und aus zwei mit Flansch (37, 46) versehenen Rohrstücken (36, 45) besteht, daß das eine Rohrstück (45) des Verschraubungsteiles (35) ein Innengewinde (44) aufweist, in das das Außengewinde (43) des Rohrstückes (42) eines mittleren Verschraubungsteiles (34) mit einem Flansch (41) eingeschraubt ist, auf dem das dritte Verschraubungsteil (33) mit dem Rohrstück (36) und dem Flansch (37) frei verdrehbar und axial zwischen dem Flansch (41) des mittleren Verschraubungsteiles (34) und dem ersten Verschraubungsteil (35) verschiebbar sitzt, wobei vorzugsweise die Rückseite der Flansche (36, 46) an der Filtertuch und Membran (7) anliegen, mit ringförmigen Vorsprüngen (38) versehen ist, und wobei vorzugsweise eine Ringförmige Ausnehmung (40) im Flansch (37) des Verschraubungsteiles (33) zur zentrierten Aufnahme des Flansches (41) des mittleren Verschraubungsteiles (34) vorgesehen ist.

7. Membranfilterplatte nach Anspruch 5 und 6, dadurch gekennzeichnet, daß die an den Filtertüchern und Membranen (7) anliegenden Flansche (37, 46) der Verschraubungsteile (33, 35) so dick sind, daß sie bis zur Ebene des Randes (2) reichen oder geringfügig über diese im nicht zusammengepressten Zustand der Filteranlage hinausstehen, und daß die an den Filtertüchern und Membranen (7) anliegenden Flansche (37, 46) der Verschraubungsteile (33, 35) mindestens eine radiale Ausnehmung (39) aufweisen.

8. Membranfilterplatte nach Anspruch 1 oder 6, dadurch gekennzeichnet, daß in dem Kunststoff des Grundkörpers (1) oder in den Kunststoffteilen der Verschraubung (33, 34, 35) Metalleinlagen eingegossen sind.

9. Membranfilterplatte nach Anspruch 1, dadurch gekennzeichnet, daß der verstärkte Membranrand (15) im Bereich des Filtratablaufes (9) in zwei Stege (16, 17) geteilt ist, daß sich zwischen den beiden Stegen (16, 17) das Loch (14) für den Filtratablauf (9) befindet, und daß der innere Steg (17) mehrere ihn querende kanalartige Ausnehmungen (18) aufweist.

10. Membranfilterplatte nach Anspruch 1, dadurch gekennzeichnet, daß von den Teilen des inneren Steges (17) zwischen den kanalartigen Ausnehmungen (18) Zungen (20) sich in Richtung auf mittlere Bereiche der Membran (7) erstrecken, die vorzugsweise die gleiche Höhe wie der innere Steg (17) aufweisen.

11. Membranfilterplatte nach Anspruch 1, dadurch gekennzeichnet, daß rings um das Loch (14) für den Filtratablauf der Membran (7) eine ringförmige Rippe (52) angeordnet ist, die vorzugsweise mit Dichtlippen (29) versehen ist.

## Revendications

1. Plaque de filtre à membrane, constituée par un corps de base en forme de plaque (1) ayant au moins une depréssion (3) qui, en son bord, se raccorde, par l'intermédiaire de surfaces montantes et d'un gradin, au plan formant le bord (2) en forme de cadre du corps de base (1), et par au moins une membrane (7) dont les dimensions de surface sont plus petites, plane lorsqu'elle n'est pas sollicitée par pression, faite en une matière ayant l'élasticité du caoutchouc et dotée d'un bord épaissi avec une nervure périmétrique (6) qui s'engage dans une rainure périmétrique (5) dans le corps de base (1), le bord (15) de la membrane formant avec la nervure (6) un profil en équerre, et la partie du bord (2) en forme de cadre du corps de base (1) non recouverte par le bord (15) de la membrane constituant la surface d'étanchéité et transmettant la force de fermeture, caractérisée par le fait que la rainure (5) dans le corps de base (1) est agencée dans, ou immédiatement à côté de, la région de la surface oblique (4) bordant la dépression (3), par le fait que la surface (24) du bord de la dépression (3) présente, à l'extérieur de la rainure périmétrique (5), une profondeur correspondant à l'épaisseur du bord (15) de la membrane moins une hauteur de déformation, et par le fait que le bord (15) de la membrane et le bord extérieur complémentaire du gradin (22) ont une section droite en forme de coin, de sorte que la surface (24) du bord du gradin (22) se raccorde, par une contre-dépouille, au bord (2) du corps de base (1).

2. Plaque de filtre à membrane selon revendication 1, caractérisée par le fait que le corps de base (1) est réalisé en une seule pièce en matière plastique, notamment en polypropylène.

3. Plaque de filter à membrane selon revendication 1, caractérisée par le fait que les parois des nervures (6, 11, 52), tout comme les parois des rainures (5, 10, 53), sont mutuellement parallèles, et par le fait que les nervures (6, 11, 52) sont de préférence munies de lèvres d'étanchéité (29).

4. Plaque de filtre à membrane selon revendication 1, caractérisée par le fait que les parois des rainures (5, 10, 53), tout comme les parois des nervures (6, 11, 52) s'étendant respectivement perpendiculairement au plan du bord (2) du corps de base (1) et au plan de la membrane (7), un renflement ou un relief étant de préférence prévu sur le fond de la rainure (5), et une cavité se trouvant de préférence entre le fond de la rainure (5, 10) et la surface du sommet de la nervure (6, 11).

5. Plaque de filtre à membrane selon revendication 1, avec une ouverture traversante servant d'entrée de préfilt (8), caractérisée par le fait qu'à distance du bord de l'entrée de préfilt (8), une nervure (11) est aménagée sur la membrane (7) et une rainure (10) est aménagée dans le corps de base (1), la membrane (7) étant serrée contre la plaque de base (1) par des moyens d'assemblage par vissage (33, 34, 35).

6. Plaque de filtre à membrane selon revendication 5, caractérisée par le fait que les moyens d'assemblage par vissage (33, 34, 35), de préférence faits en matière plastique, sont en trois parties et consistent en deux pièces tubulaires (36, 45) munies d'un collet (37, 46), par le fait que la première pièce tubulaire (45) de la partie (35) des moyens d'assemblage par vissage présente un filetage intérieur (44) dans lequel peut être vissé le filetage extérieure (43) de la pièce tubulaire (42) d'une partie médiane (34) des moyens d'assemblage dotée d'un collet (41), sur laquelle la troisième partie (33) des moyens d'assemblage, avec la pièce tubulaire (36) et le collet (37), peut tourner librement et est monté avec possibilité de coulissement axial entre le collet (41) de la partie médiane (34) des moyens d'assemblage et la première partie (35) des moyens d'assemblage, le côté arrière des collets (35, 46), contre lequel s'appliquent le tissu filtrant et la membrane (7), étant de préférence muni de saillants annulaires (38), et un évidement annulaire (40) étant de préférence prévu dans le collet (37) de la partie (33) des moyens d'assemblage, afin de recevoir avec centrage le collet (41) de la partie médiane (34) des moyens d'assemblage.

7. Plaque de filter à membrane selon revendication 5 et 6, caractérisée par le fait que les collets (37, 46) des parties (33, 35) des moyens d'assemblage s'appliquant contre les tissus filtrants et les membranes (7) ont une épaisseur telle qu'ils atteignent le plan du bord (2) ou dépassent légèrement ledit plan lorsque l'installation de filtre est en condition non-comprimée, et par le fait que les collets (37, 46) des parties (33, 35) des moyens d'assemblage, s'appliquant contre les tissus filtrants et les membranes, présentent au moins un évidement radial (39).

8. Plaque de filtre à membrane selon revendication 1 ou 6, caractérisée par le fait que des inserts métalliques sont noyés dans la matière plastique du corps de base (1) ou dans les parties en matière plastique des moyens d'assemblage par vissage (33, 34, 35).

9. Plaque de filtre à membrane selon revendication 1, caractérisée par le fait que le bord renforcé (15) de la membrane est partagé, dans la région de la sortie (9) du filtrat, en deux âmes (16, 17), par le fait que le trou (14) pour la sortie (9) du filtrat se trouve entre les deux âmes (16, 17), et par le fait que l'âme intérieure (17) présente plusieurs évidements (18) du genre canal qui le traversent.

10. Plaque de filtre à membrane selon revendication 1, caractérisé par le fait que, partant des parties de l'âme intérieure (17) comprises entre les évidements du genre canal (18), des languettes (20) s'étendent en direction de régions centrales de la membrane (7), ces languettes ayant de préférence la même hauteur que l'âme intérieure (17).

11. Plaque de filtre à membrane selon revendication 1, caractérisée par le fait qu'une nervure annulaire (52), de préférence munie de lévres d'étanchéité (29), est agencée autour du trou (14) pour la sortie de filtrat de la membrane (17).

**Claims**

1. Membrane filter plate, consisting of a plate-shaped basic body (1) with at least one recess (3), which passes over on its edge through rising areas and a step into the plane forming the frame-shaped edge (2) of the basic body (1), and consisting of at least one membrane (7), smaller in its area dimensions, consisting of a rubber-elastic material, level in the state which is not loaded by pressure, with a thickened edge with a circulating rib (6), which engages into a circulating groove (5) in the basic body (1), whereby the membrane edge (15) forms with the rib (6) an angle section and whereby the part of the frame-shaped edge (2) of the basic body (1) which is not covered by the membrane edge (15) forms the sealing surface and transmits the closing force, characterized in that the groove (5) in the basic body (1) is arranged in or directly next to the region of the inclined area (4) limiting the recess (3), in that the edge area (24) of the recess (3) outside the circulating groove (5) has a depth which corresponds to the thickness of the membrane edge (15) less a degree of inward resilience, and in that the membrane edge (15) and the complementary outer edge of the step (22) in cross-section are formd in a wedge-shaped manner, so that the edge area (24) of the step (22) undercuts the edge (2) of the basic body (1).

2. Membrane filter plate according to claim 1, characterized in that the basic body (1) is manufactured in one piece from synthetic material, more particularly polypropylene.

3. Membrane filter plate according to claim 1, characterized in that the walls of the ribs (6, 11, 52) and the walls of the grooves (5, 10, 53) extend in parallel with one another and in that preferably the ribs (6, 11, 52) are provided with sealing lips (29).

4. Membrane filter plate according to claim 1, characterized in that the walls of the grooves (5, 10, 53) and the walls of the ribs (6, 11, 52) extend at right angles to the plane of the edge (2) of the basic body (1) or the plane of the membrane (7), whereby preferably on the bottom of the groove (5) an elevation or a projection is provided, and whereby preferably between the base of the groove (5, 10) and the surface of the rib (6, 11) a cavity is located.

5. Membrane filter plate according to claim 1, with a piercing opening serving as pulp inlet (8), characterized in that at a distance from the edge of the pulp inlet (8) on the membrane (7) a rib (11) is arranged and in the basic body (1) a groove (10) is arranged, whereby the membrane (7) is pressed against the base plate (1) by means of a screw joint (33, 34, 35).

6. Membrane filter plate according to claim 5, characterized in that the screw joint (33, 34, 35) is in three parts, is manufactured preferably from synthetic material and consists of two pipes (36, 45) provided with flange (37, 46), in that the one pipe piece (45) of the screw joint part (35) has an internal thread (44), into which the external thread (43) of the pipe piece (42) of a middle screw joint part (34) with a flange (41) is screwed, on which the third screw joint part (33) sits with the pipe piece (36) and the flange (37) in a freely rotatable and axial manner between the flange (41) of the middle screw joint part (34) and the first screw joint part (35) so that it can be displaced, whereby preferably the rear side of the flange (36, 46) rests on the filter cloth and membrane (7), is provided with annular projections (38), and whereby preferably an annular cutout (40) is provided in the flange (37) of the screw joint part (33) for the centred uptake of the flange (41) of the middle screw joint part (34).

7. Membrane filter plate according to claim 5 and 6, characterized in that the flanges (37, 46) of the screw joint parts (33, 35), resting on the filter cloths and membranes (7), are so thick that they reach up to the plane of the edge (2) or stand a little above this when the filter installation is not in the compressed state, and in that the flanges (37, 46) of the screw joint parts (33, 35), resting on the filter cloths and membranes (7), have at least one radial cutout (39).

8. Membrane filter plate according to claim 1 or 6, characterized in that metal inserts are cast into the synthetic material of the basic body (1) or into the synthetic material parts of the screw joint (33, 34, 35).

9. Membrane filter plate according to claim 1, characterized in that the strengthened membrane edge (15) in the region of the filtrate outlet (9) is divided into two bars (16, 17), in that between the two bars (16, 17) the hole (14) for the filtrate outlet (9) is located, and in that the inner bar (17) has several channel-like cutouts (18) which cross it.

10. Membrane filter plate according to claim 1, characterized in that from the parts of the inner bar (17) between the channel-like cutouts (18) tongues (20) extend in the direction of the middle regions of the membrane (7), which preferably have the same height as the inner bar (17).

11. Membrane filter plate according to claim 1, characterized in that around the hole (14) for the filtrate outlet of the membrane (7) an annular rib (52) is arranged, which is preferably provided with sealing lips (29).

FIG. 1

FIG. 2

FIG. 3

FIG.4

4

FIG. 6

FIG.7

FIG. 5

FIG. 8

FIG.9

FIG. 10

FIG. 11

FIG.16

FIG.12

FIG.13

## FIG.14

FIG. 15